# EUROPÄISCHE PATENTSCHRIFT

(11) **EP 2 653 763 B1**
(45) Veröffentlichungstag und Bekanntmachung des Hinweises auf die Patenterteilung: **08.06.2016**
(21) Anmeldenummer: 13160009.0
(22) Anmeldetag: 19.03.2013
(51) Int. Cl.: F16K 39/02, F16K 27/02, F16K 31/06

(54) **Elektromagnetisches Ventil für ein Behälterventil einer Kraftstoffversorgungsanlage**
Electromagnetic valve for a container valve of a fuel supply system
Soupape électromagnétique pour une soupape de contenant d'une installation d'alimentation en carburant

(30) Priorität: 20.04.2012 DE 102012206604
(43) Veröffentlichungstag der Anmeldung: 23.10.2013
(73) Patentinhaber: Hyptec GmbH, 8403 Lebring (AT)
(72) Erfinder: Zieger, Andreas, 8321 Hofstätten an der Raab (AT); Höller, Thomas, 8403 Lebring (AT)
(74) Vertreter: Lang, Johannes

(56) Entgegenhaltungen:
- WO-A1-2010/029359
- CA-A1- 2 802 182
- DE-A1-102010 026 548

## Beschreibung

Die vorliegende Erfindung betrifft ein elektromagnetisches Ventil für ein Behälterventil einer Kraftstoffversorgungsanlage zum Zuführen eines gasförmigen Kraftstoffes zu einem Speicherbehälter und zur Versorgung eines Verbrauchers mit gasförmigem Kraftstoff aus diesem Speicherbehälter. Die vorliegende Erfindung betrifft weiterhin ein solches Behälterventil und eine Kraftstoffversorgungsanlage mit einem solchen elektromagnetischen Ventil.

Alternative gasförmige Energieträger wie Erdgas, Methan, Biogas und Wasserstoff gewinnen im Verkehrswesen aufgrund ihres CO₂-Einsparpotentials und aus Gründen der Versorgungssicherheit zunehmend an Bedeutung. Diese Energieträger werden zur Erzielung der geforderten Reichweiten typischerweise in komprimierter Form in Druckzylindern bei Nenndrücken von bis zu 700 bar gespeichert und dem Verbraucher bei einem Arbeitsdruck von ca. 10 bar zur Verfügung gestellt.

Das elektromagnetische Ventil steuert die Gasströmung bei der Betankung und im Fahrbetrieb und ist ein wesentlicher Bestandteil eines Behälterventiles, das zusätzlich Sicherungselemente wie z.B. Überdrucksicherung und/oder Thermische Sicherung zur Sicherung des Speicherbehälters vor unzulässig hohen Drücken oder Feuereinwirkung, Durchflussbegrenzer zum Schutz vor unzulässig großen Gasströmen nach externem Bauteilbruch, Schaltelemente wie z.B. manuelles Absperrventil zur Unterbindung der Gasströmung, Serviceventil zum manuellen Entleeren des Speicherbehälters, Zusatzelemente wie z.B. Filterelement zum Schutz der Schaltelemente vor Verschmutzung, Rückschlagventil zur Druclchaltung, Temperatursensor zur Messung der Gastemperatur im Behälter, u.dgl. enthält und hohe Sicherheitsanforderungen bei äußerer Krafteinwirkung erfüllt.

Dem Fachmann sind unterschiedliche Ausführungsformen von elektromagnetischen Ventilen bekannt, deren Funktionsweise und Anordnung die Form und Größe des Behälterventiles bestimmt.

Aus der US 5 188 017 ist ein außen anzubringendes vorgesteuertes elektromagnetisches Ventil mit einteiligem Anker bekannt: Von Vorteil sind der einfache Aufbau des elektromagnetischen Ventiles und das einfache Bohrbild des Behälterventiles. Von Nachteil sind Baugröße des elektromagnetischen Ventiles und des Behälterventiles durch die Größe der Magnetspule, Leistungsaufnahme des elektromagnetischen Ventiles durch den einteiligen Anker, fehlender Schutz vor äußerer Krafteinwirkung und gegen unsachgemäße Manipulation und das geringere Speichervolumen des Behälters durch die große Aufbauhöhe des Behälterventiles.

Aus der DE 601 02 241 ist ein Behälterventil mit einem innen anzubringenden vorgesteuerten elektromagnetischen Ventil mit einteiligem Anker bekannt: Von Vorteil sind der Schutz bei äußerer Krafteinwirkung und gegen unsachgemäße Manipulation und das einfache Bohrbild des Behälterventiles. Von Nachteil sind der Bauaufwand durch die Bauteilanzahl des elektromagnetischen Ventiles und die Leistungsaufnahme des elektromagnetischen Ventiles durch den einteiligen Anker.

Aus der DE 103 61 781 ist ein Behälterventil mit einem innen anzubringenden vorgesteuerten elektromagnetischen Ventil mit beweglichem Pol bekannt: Von Vorteil sind der Schutz bei äußerer Krafteinwirkung und die Leistungsaufnahme des elektromagnetischen Ventiles durch den beweglichen Gegenpol. Von Nachteil sind der Bauaufwand für das elektromagnetische Ventil durch die Bauteilanzahl, der Bauaufwand und die Baugröße des Behälterventils durch die erforderlichen zu verschließenden Querbohrungen durch den von außen zugängigen Längseinbau und der fehlender Schutz gegen unsachgemäße Manipulation.

Dokument CA 2 802 182 A1 offenbart einen Ventilhauptkörper, welcher in einem Gehäuse bereitgestellt ist, das in einem magnetischen An-Aus-Ventil beinhaltet ist. Eine Vorausöffnung ist an dem Ventilhauptkörper gebildet und ein Vorausventilkörper ist in die Vorausöffnung eingefügt um so die Vorausöffnung zu öffnen und zu schließen. Der Vorausventilkörper und der Hauptventilkörper bewegen sich in Übereinstimmung mit der Bewegung eines Ventilkolbens, der in einer öffnenden Richtung beweglich ist. Der Ventilkolben und der Vorausventilkörper sind miteinander gekoppelt durch einen Koppelungspin, der durch den Ventilkolben und den Vorausventilkörper eingefügt ist. Der Koppelungspin ist bereitgestellt um relativ zu dem Vorausventilkörper verschiebbar zu sein. Wenn der Ventilhauptkörper in die öffnende Richtung gedrückt wird und bevor der Koppelungspin den Vorausventilkörper kontaktiert, hält der Ventilkolben die Bewegung des Hauptventilkörpers relativ zu dem Ventilkolben in der öffnenden Richtung an. Damit ist es möglich ein magnetisches An-Aus-Ventil bereitzustellen, dass fähig ist, eine Scherkraft daran zu hindern, auf den Koppelungspin zu wirken, wenn der Ventilanschluss durch Drücken des Ventilhauptkörpers geöffnet wird.

Dokument WO 2010/029359 A1 offenbart eine elektronisch betätigbare Ventilanordnung, die ein Ventilelement beinhaltet, das ein ferromagnetisches Element und eine magnetische Schaltung umfasst, die eingerichtet ist, magnetischen Fluss durch das ferromagnetische Element zu leiten wenn das Ventilelement getrennt von seiner Ventilauflage angeordnet ist um das primäre Ventil offen zu halten.

Die vorliegende Erfindung stellt sich die Aufgabe, die Nachteile des Standes der Technik zu vermeiden und ein elektromagnetisches Ventil bzw. ein Behälterventil in kompakter und einfacher Bauweise zu schaffen, das unter anderem einige oder alle folgenden Vorteile aufweist:
- Kompakte Bauform und geringe Leistungsaufnahme des elektromagnetischen Ventiles durch gewähltes Funktionsprinzip
- Einfacher Aufbau des elektromagnetischen Ventiles durch geringe Bauteilanzahl
- Schutz bei äußerer Krafteinwirkung und gegen unsachgemäße Manipulation durch Anordnung des elektromagnetischen Ventiles im Inneren des Speicherbehälters
- Kompakte Bauform des Behälterventiles mit einfachem Bohrbild durch Anordnung des elektromagnetischen Ventiles im Inneren des Speicherbehälters

Diese technische Aufgabe der vorliegenden Erfindung wird vom Gegenstand der unabhängigen Patentansprüche gelöst. Weitere Ausgestaltungen der Erfindung sind in den abhängigen Ansprüchen zu finden.

Das erfindungsgemäße elektromagnetische Ventil für ein Behälterventil einer Kraftstoffversorgungsanlage eines Gaskraftfahrzeugs umfasst eine Magnetspule mit einem inneren Rückschluss und einen Magnetanker, der in dem inneren Rückschluss axial beweglich ist. Der Magnetanker besteht aus einem Anker, einem Dichtelement, welches zwischen dem Anker und einem Kraftstoffzulauf angeordnet ist, und einem Gegenpol, welches am Dichtelement anliegt.

Die Magnetspule umfasst vorzugsweise eine Befestigungskomponente, den inneren Rückschluss, einen äußeren Rückschluss und einen Abschluss. Das elektromagnetische Ventil umfasst vorzugsweise weiterhin ein elastisches Element, welches bei nicht erregter Magnetspule den Anker gegen das Dichtelement und das Dichtelement gegen eine Dichtfläche drückt.

In anderen Worten, die Aufgabe wird beispielhaft durch ein gehäuseloses vorgesteuerte elektromagnetischen Ventil mit beweglichem Gegenpol gelöst, dessen verschiebbarer Magnetanker nur aus Dichtelement, Anker und Gegenpol besteht, der durch den inneren Rückschluss der Magnetspule geführt wird, wobei der Gegenpol am Dichtelement anliegt und zum Anker, der bevorzugt zumindest teilweise vom Dichtelement umfasst wird, den ersten Arbeitsspalt zum Öffnen der Vorsteuerbohrung durch Abheben des Ankers von der Vorsteuerdichtfläche bildet, und der Gegenpol in axialer Richtung zum inneren Rückschluss den zweiten Arbeitsspalt zum Öffnen des Zulaufes durch Abheben des Dichtelementes von der Hauptdichtfläche bildet.

Durch die Ausführung mit beweglichem Gegenpol ist der Vorsteuerhub zum Öffnen der Vorsteuerbohrung unabhängig vom Haupthub zum Öffnen der Hauptbohrung, sodass mit dem kleinen ersten Arbeitsspalt zum Öffnen der Vorsteuerbohrung eine kleine elektrische Leistung benötigt und mit dem großen zweiten Arbeitsspalt ein großer Strömungsquerschnitt mit geringen Drosselverlusten erreicht wird. Durch die direkte Führung des Magnetankers im inneren Rückschluss der Magnetspule, der das Magnetfeld gezielt zum bzw. vom Magnetanker führt, wird die Leistungsaufnahme des elektromagnetischen Ventiles weiter verringert. Durch den Verbau des elektromagnetischen Ventiles im Hochdruckraum des Speicherbehälters wird auf ein drucktragendes Gehäuse verzichtet, was die Ausbreitung des Magnetfeldes erleichtert, und trotzdem der Schutz bei äußere Krafteinwirkung und gegen unsachgemäße Manipulation sichergestellt. Durch den einfachen Aufbau des Magnetankers aus drei Teilen (Anker, Dichtelement, Gegenpol) und das entfallende drucktragende Gehäuse werden Gewicht und Kosten des elektromagnetischen Ventiles reduziert.

Die Magnetspule und der Magnetanker sind bevorzugt so angeordnet, dass beim Aktivieren der Magnetspule zuerst eine Vorsteueröffnung für den Kraftstoff durch Verschieben des Ankers in Richtung des Gegenpols und durch Ablösen des Ankers von dem Dichtelement geöffnet wird, und nachfolgend eine Hauptöffnung für den Kraftstoff durch Verschieben des Magnetankers in Richtung eines Abschluss der Magnetspule und durch Ablösen des Dichtelements vom Kraftstoffzulauf geöffnet wird.

Der erste Arbeitsspalt ist vorzugsweise kleiner als der zweite Arbeitsspalt, so dass der erste Arbeitsspalt beispielhaft zwischen 50 und 0,5 % und weiter bevorzugt zwischen 25 und 0,01 % der Länge des zweiten Arbeitsspalts beträgt. Die Vorsteueröffnung weist vorzugsweise einen kleineren Strömungsquerschnitt als die Hauptöffnung auf, der bevorzugt zwischen 25 und 0,05 % und weiter bevorzugt zwischen 15 und 1 % des Strömungsquerschnitts der Hauptöffnung liegt.

Die vorliegende Erfindung betrifft weiterhin ein solches Behälterventil und eine Kraftstoffversorgungsanlage mit einem solchen elektromagnetischen Ventil. Die vorliegende Erfindung betrifft weiterhin einen Durchflussbegrenzer für eine solche Kraftstoffversorgungsanlage aus einem Ventilkörper mit einem integrierten Filterelement.

Anhand der Zeichnungen werden verschiedene beispielhafte Ausführungsformen der Erfindung im Folgenden erläutert:
Fig. 1 zeigt schematisch eine Kraftstoffversorgungsanlage eines gasbetriebenen Kraftfahrzeuges.
Fig. 2 zeigt ein elektromagnetisches Ventil gemäß einem ersten Ausführungsbeispiel im geschlossenen Zustand.
Fig. 2.1 zeigt ein elektromagnetisches Ventil gemäß einem ersten Ausführungsbeispiel bei geöffneter Vorsteuerbohrung.
Fig. 2.2 zeigt ein elektromagnetisches Ventil gemäß einem ersten Ausführungsbeispiel bei geöffnetem Zulauf.
Fig. 3 zeigt ein elektromagnetisches Ventil gemäß einem zweiten Ausführungsbeispiel im geschlossenen Zustand.
Fig. 4, 5 und 6 zeigen unterschiedliche Magnetanker für ein elektromagnetisches Ventil.
Fig. 7, 7.1 und 7.2 zeigt ein Behälterventil gemäß einem ersten Ausführungsbeispiel.
Fig. 8 zeigt ein Behälterventils gemäß einem zweiten Ausführungsbeispiel.
Fig. 9 zeigt ein Behälterventil gemäß einem dritten Ausführungsbeispiel.
Fig. 10 zeigt ein elektromagnetisches Ventil mit einem mehrteiligen druckdichtem Gehäuse

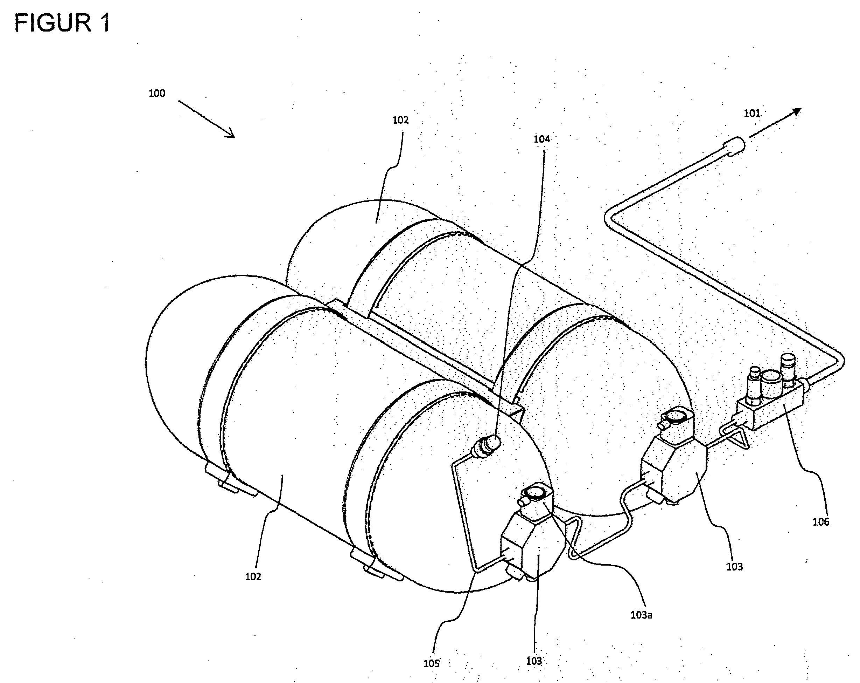

Wie in Fig. 1 gezeigt, umfasst eine Kraftstoffversorgungsanlage 100, insbesondere eines gasbetriebenen Kraftfahrzeuges, für die Versorgung eines Verbrauchers 101, mit gasförmigen Kraftstoff wie Erdgas, Methan, Biogas, Wasserstoff oder dergleichen einen oder mehrere Speicherbehälter 102 mit Behälterventil 103 und elektromagnetischem Ventil 200, die bei der Betankung über eine befüllseitig angeordnete Befüllkupplung 104 mit integrierter Rückflusssperre und Filter und einer daran anschließenden Gaszuführleitung 105 mit Kraftstoffgas versorgt werden und den Verbraucher 101 über eine Regeleinheit 106, bestehend zumindest aus einem Druckregler, der den Druck des gespeicherten Gases vom Speicherdruck auf den arbeitsdruck reduziert, mit Kraftstoffgas versorgt.

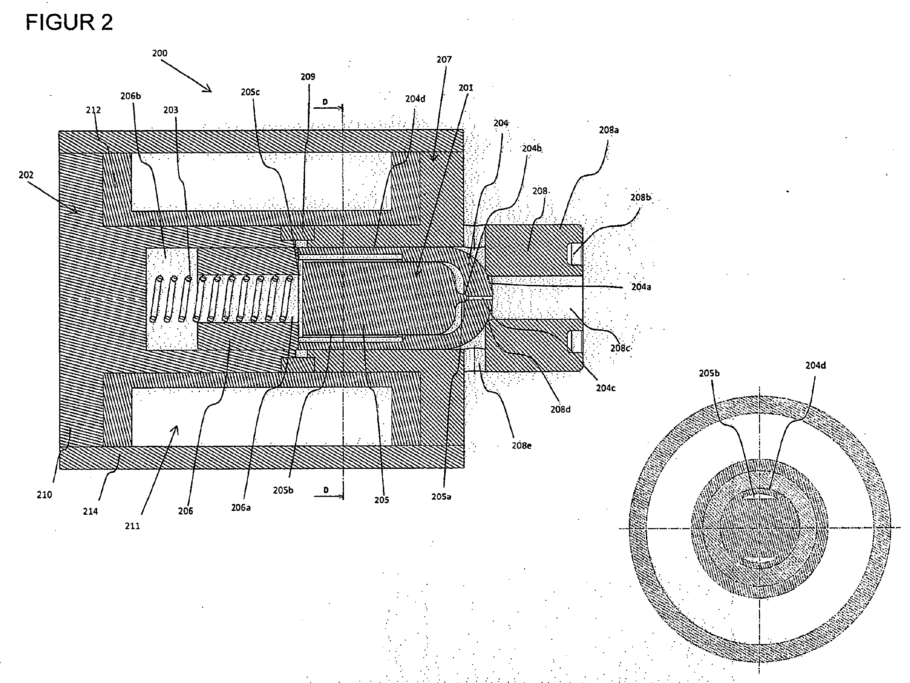

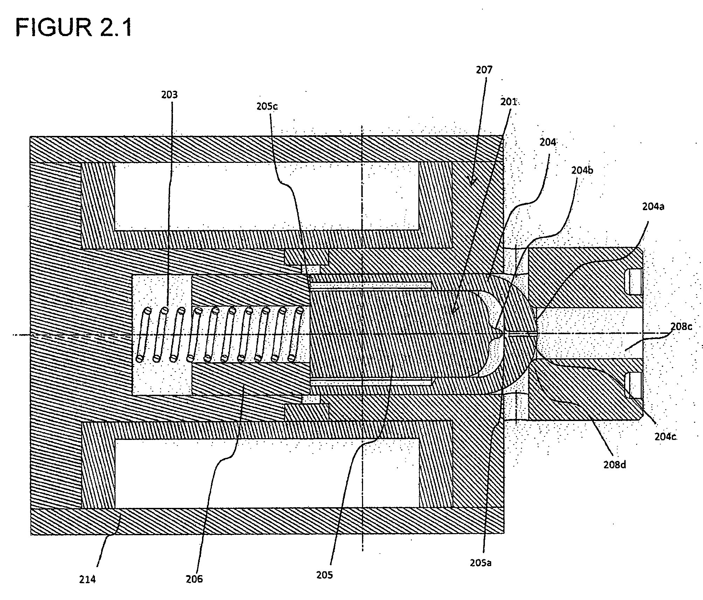

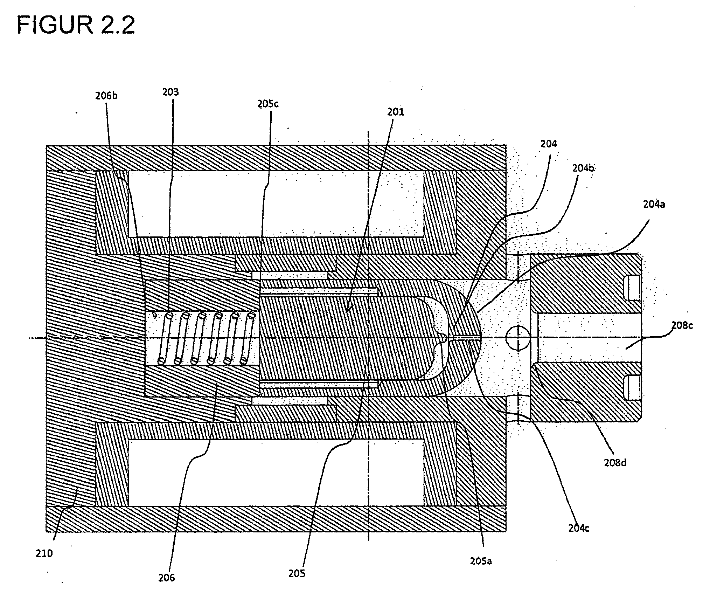

Wie in Fig. 2 gezeigt, umfasst das elektromagnetische Ventil 200 in einer bevorzugten Ausführungsform einen mehrteiligen Magnetanker 201, eine mehrteilige Magnetspule 202 und vorzugsweise eine Feder als elastisches Element 203 zum Verschließen bzw. zur Freigabe des Zulaufes 208c gegen den Hochdruckraum 102a des Speicherbehälters 102. Der Magnetanker 201 umfasst ein Dichtelement 204 aus einem geeignetem Dichtwerkstoff mit einer Hauptdichtfläche 204a zur Abdichtung gegen die Dichtfläche 208d der Ventilbefestigung 208, einer Vorsteuerdichtfläche 204b zur Abdichtung gegen die zugeordnete Vorsteuerdichtfläche 205a des Ankers 205, und einer Bohrung 204c zwischen Vorsteuerdichtfläche 204b und Hauptdichtfläche 204a und einer Abstützung 204d zur Abstützung des Gegenpoles 206 am Dichtelement 204, einen magnetisierbaren Anker 205 mit einer Vorsteuerdichtfläche 205a zur Abdichtung gegen die zugeordnete Vorsteuerdichtfläche 204b und Nuten 205b zur Aufnahme der Abstützung 204d, einen magnetisierbaren beweglichen Gegenpol 206, der an der Abstützung 204d anliegt, mit einer Innenbohrung 206a zur Aufnahme des elastischen Elementes 203. Das elastische Element 203 drückt den Anker 205 gegen das Dichtelement 204 und das Dichtelement 204 gegen die Dichtfläche 208d und verschließt im stromlosen Zustand bei nicht erregter Magnetspule 202 den Strömungsweg zwischen dem Zulauf 208c und dem Hochdruckraum 102a des Speicherbehälters 102. Zwischen dem Anker 205 und dem Gegenpol 206 liegt der erste Arbeitsspalt 205c und zwischen dem Gegenpol 206 und Abschluss 210 liegt der zweite Arbeitsspalt 206b des Magnetsystems. Die Magnetspule 202 umfasst einen mehrteiligen inneren Rückschluss 207 aus einer magnetisierbaren Ventilbefestigung 208 mit geeignetem Befestigungsgewinde 208a zur Befestigung des elektromagnetischen Ventiles 200 im Gehäuse des Behälterventiles 103, einer Nut 208b zur Aufnahme einer geeigneten Dichtung zur Abdichtung des Hochdruckraumes 102a zum Zulauf 208c, einer Dichtfläche 208d zur Abdichtung gegen die zugeordnete Hauptdichtfläche 204a und Strömungswegen 208e zum Hochdruckraum 102a des Speicherbehälters 102, einem unmagnetischen Distanzstück 209 zu Führung des Magnetfeldes und einem magnetisierbaren Abschluss 210. Die Magnetspule 202 umfasst weiters eine umspritzte Magnetwicklung 211 aus einem Wickelkörper 212 zur Aufnahme einer Wicklung (Kupferdraht) und einen magnetisierbaren Äußeren Rückschluss 214 zur Verbindung der Einzelteile der Magnetspule 202 und des elektromagnetischen Ventiles 200.

Wie in Fig. 2 gezeigt, drückt im stromlosen und nicht erregtem Zustand der Magnetspule 202 das elastische Element 203 über den Anker 205 die Vorsteuerdichtfläche 205a gegen die zugeordnete Vorsteuerdichtfläche 204b und die Hauptdichtfläche 204a gegen die Dichtfläche 208d und verschließt somit die Verbindung zwischen dem Hochdruckraum 102a des Speicherbehälters 102 und dem Zulauf 208c. In diesem Betriebszustand ist zwischen dem Anker 205 und dem Gegenpol 206 ein erster Arbeitsspalt 205c vorhanden.

Wie in Fig. 2.1 gezeigt, wird zu Beginn der Entnahme durch Bestromen der Magnetspule 202 ein Magnetfeld über die magnetisierbaren Teile des Magnetankers 201, den Arbeitsspalt 205c, den magnetisierbaren Teilen des Inneren Rückschlusses 207 und dem Äußeren Rückschluss 214 der Magnetspule 202 aufgebaut. Infolge der Magnetkraft am Arbeitsspalt 205c wird der Anker 205 entgegen der Kraft des elastischen Elementes 203 zum Gegenpol 206, der sich am Dichtelement 204 abstützt, gezogen und hebt die Vorsteuerdichtfläche 205a von der zugeordneten Vorsteuerdichtfläche 204b ab. Hochdruckgas aus dem Bereich des Gegenpoles 206 kann bis zum Druckausgleich über die freigegebene Vorsteuerbohrung 204c in den Zulauf 208c abströmen.

Wie in Fig. 2.2 gezeigt, entsteht durch das Abströmen von Hochdruckgas aus dem Bereich des Gegenpoles 206 über die freigegebene Vorsteuerbohrung 204c eine Druckdifferenz, die den Magnetanker 201 entgegen der Federkraft des elastischen Elementes 203 gegen den Abschluss 210 drückt und die Hauptdichtfläche 204a von der zugeordneten Dichtfläche 208d abhebt und den Strömungsweg vom Hochdruckraum 102a des Speicherbehälters 102 zum Zulauf 208c freigibt.

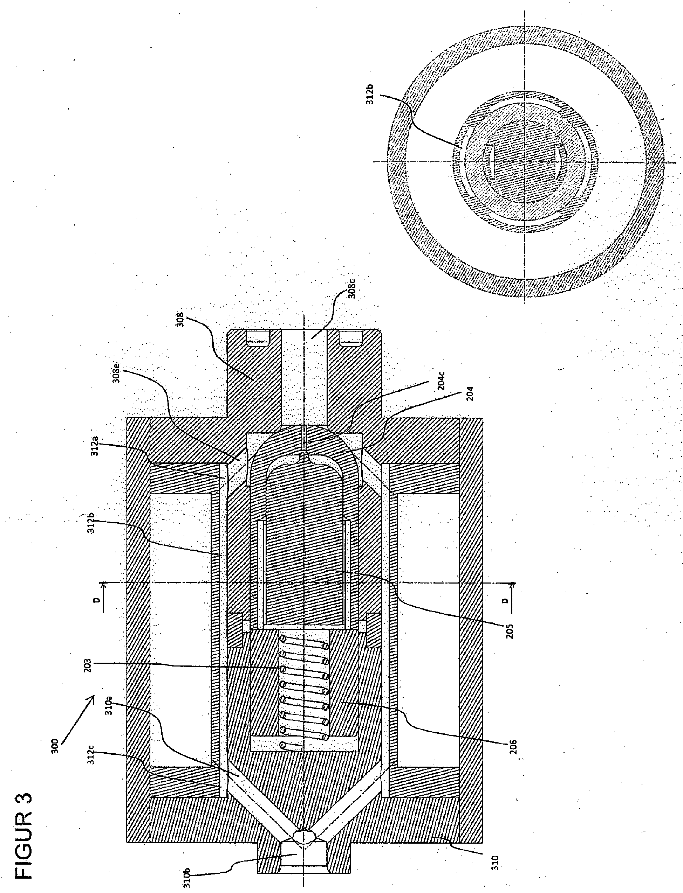

Durch die Abschaltung des Stromes wird das magnetische Feld im elektromagnetischen Ventil 200 abgebaut und das elastische Element 203 verschiebt den Anker 205 mit dem Dichtelement 204 in die Schließposition gemäß Fig. 3, und der Gegenpol 206 wird durch die noch vorhandenen Magnetkräfte in die Schließposition mitgenommen. Die Schließwirkung wird bei geschlossener Bohrung 204c durch die über dem Magnetanker 201 aufgebaute Druckdifferenz verstärkt.

Wie in Fig. 3 gezeigt, umfasst das elektromagnetische Ventil 300 in einer weiteren Ausführung eine Ventilbefestigung 308 mit Strömungswegen 308e zur Führung der Strömung in der Ventilbefestigung 308, einen Ventilabschluss 310 mit Strömungswegen 310a zur Führung der Strömung im Ventilabschluss 310, die in einen Strömungsweg 310b münden, und einen Wickelkörper mit eingangsseitigem Sammler 312a, Strömungsweg 312b und ausgangsseitigem Sammler 312c. Bei geöffnetem elektromagnetischen Ventil 300 strömt das Hochdruckgas vom Zulauf 308c über die Strömungswege 308e, 312a, 312b, 312c, 310a und 310b in den Hochdruckraum 102a des Speicherbehälters 102.

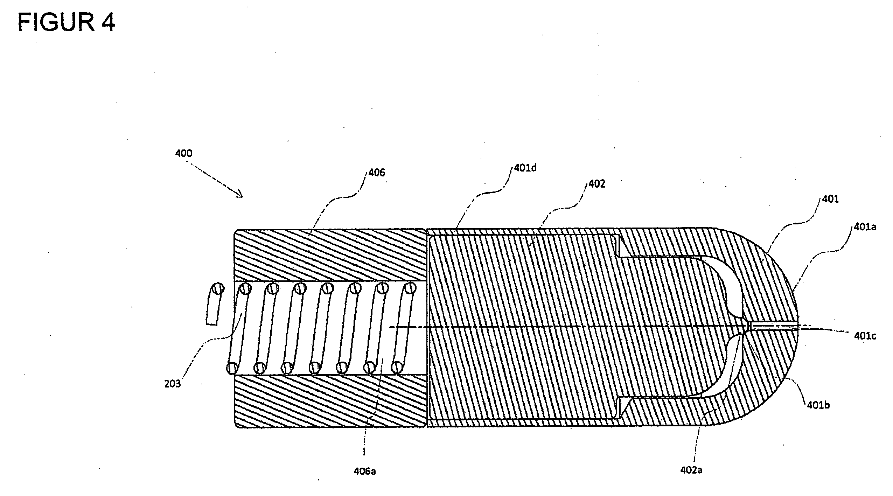

Wie in Fig. 4 gezeigt, umfasst ein Magnetanker 400 gemäß einem weiteren Ausführungsbeispiel ein Dichtelement 401 aus einem geeignetem Dichtwerhstoff mit einer Hauptdichtfläche 401a zur Abdichtung gegen die zugeordnete Dichtfläche 208d der Magnetspule 202, einer Vorsteuerdichtfläche 401b zur Abdichtung gegen die zugeordnete Vorsteuerdichtfläche 402a des Ankers 402, einer Bohrung 401c zwischen Vorsteuerdichtfläche 402a und Hauptdichtfläche 401a und einer Abstützung 401d zur Abstützung des Gegenpoles 406 am Dichtelement 401, und einen magnetisierbaren Anker 402 mit einer Vorsteuerdichtfläche 402a zur Abdichtung gegen die zugeordnete Vorsteuerdichtfläche 401b, und einen magnetisierbaren beweglichen Gegenpol 406, der an der Abstützung 401d anliegt, mit einer Innenbohrung 406a zur Aufnahme des elastischen Elementes 203.

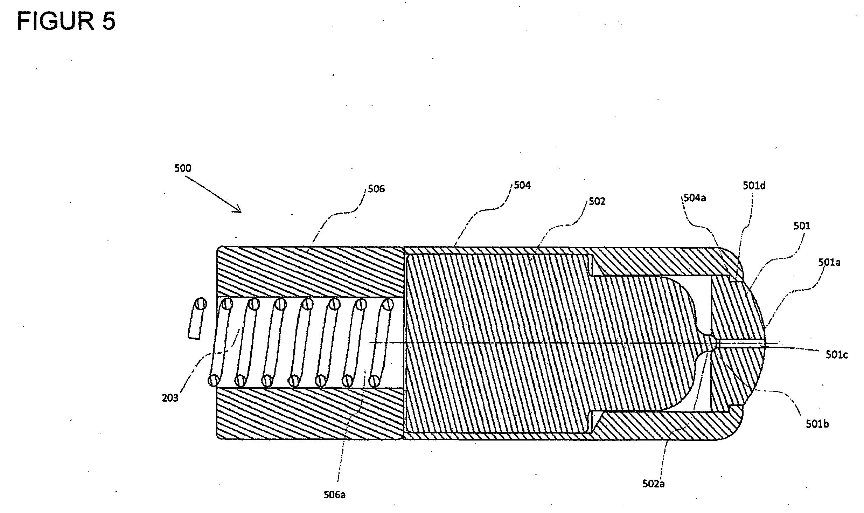

Wie in Fig. 5 gezeigt, umfasst ein Magnetanker 500 gemäß einem weiteren Ausführungsbeispiel ein Dichtelement 501 aus einem geeigneten Dichtwerkstoff mit einer Hauptdichtfläche 501a zur Abdichtung gegen die zugeordnete Dichtfläche 208d der Magnetspule 202, einer Vorsteuerdichtfläche 501b zur Abdichtung gegen die zugeordnete Vorsteuerdichtfläche 502a des Ankers 502, einer Bohrung 501c zwischen Hauptdichtfläche 502a und Vorsteuerdichtfläche 502b und einem Ansatz 501d zur Aufnahme in der Abstützung 504, einer Abstützung 504 zur Aufnahme des Dichtelementes 501 und Abstützung des Gegenpoles 506 und einen magnetisierbaren Anker 502 mit einer Vorsteuerdichtfläche 502a zur Abdichtung gegen die zugeordnete Vorsteuerdichtfläche 501b, und einen magnetisierbaren beweglichen Gegenpol 506, der an der Abstützung 504 anliegt, mit einer Innenbohrung 506a zur Aufnahme des elastischen Elementes 203.

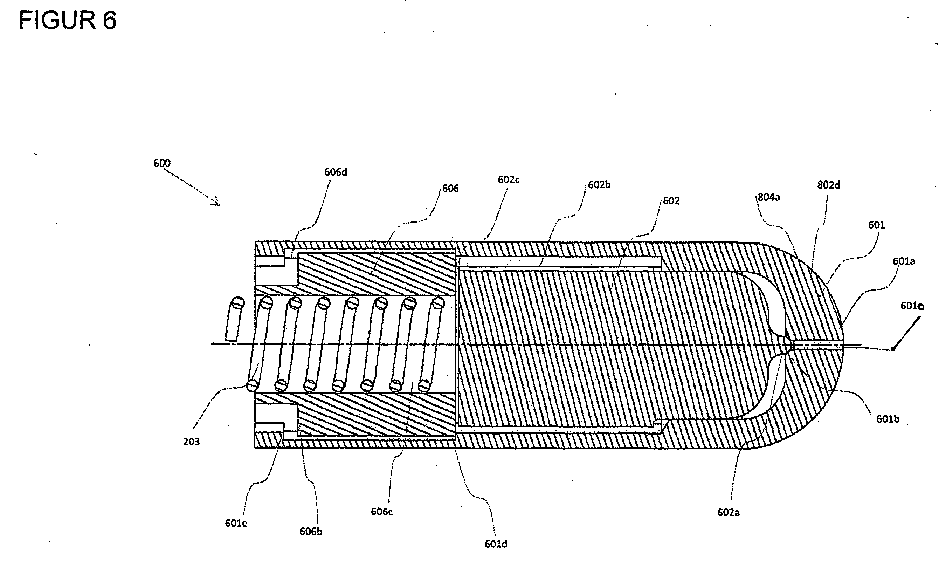

Wie in Fig. 6 gezeigt, umfasst ein zwangsgesteuerter Magnetanker 600 gemäß einem weiteren Ausführungsbeispiel ein Dichtelement 601 aus einem geeignetem Dichtwerkstoff mit einer Hauptdichtfläche 601a zur Abdichtung gegen die zugeordnete Dichtfläche 208d der Magnetspule 202, einer Vorsteuerdichtfläche 601b zur Abdichtung gegen die zugeordnete Vorsteuerdichtfläche 602a des Ankers 602, einer Bohrung 601c zwischen Hauptdichtfläch 601a und Vorsteuerdichtfläche 601b, einer Abstützung 601d zur Abstützung des Gegenpoles 606 am Dichtelement 601 und einem Mitnehmer 601e zur Mitnahme durch den Gegenpol 603, und einen magnetisierbaren Anker 602 mit einer Vorsteuerdichtfläche 602a zur Abdichtung gegen die zugeordnete Vorsteuerdichtfläche 601b, und einen magnetisierbaren beweglichen Gegenpol 606, der an der Abstützung 601d anliegt, mit einer Innenbohrung 606c zur Aufnahme des elastischen Elementes 203 und einem Mitnehmer 606b zur Mitnahme des Dichtelementes 601. Zwischen dem Dichtelement 601 und dem Gegenpol 606 ist der erste Arbeitsspalt 602c und der Mitnehmerspalt 606d und zwischen Gegenpol 606 und dem Abschluss 210 ist der zweite Arbeitsspalt 206b ausgebildet.

Durch die Zwangssteuerung über den Mitnehmer 601e und 606b wird das Dichtelement 601 zusätzlich zu den Druckkräften an den Einzelteilen des Magnetankers 600 durch die vorhandene Magnetkraft von der zugeordneten Dichtfläche 208c abgehoben.

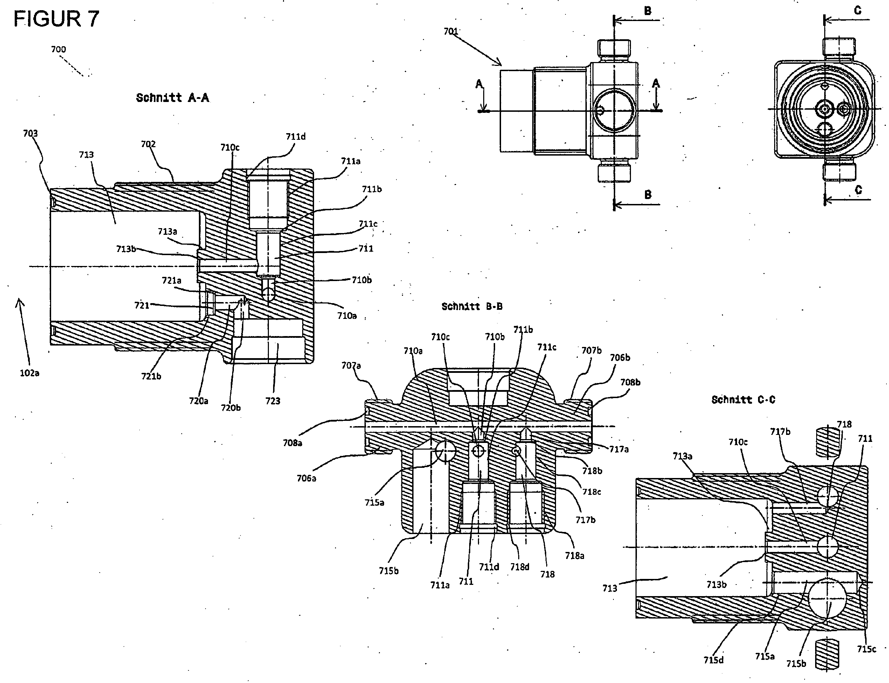

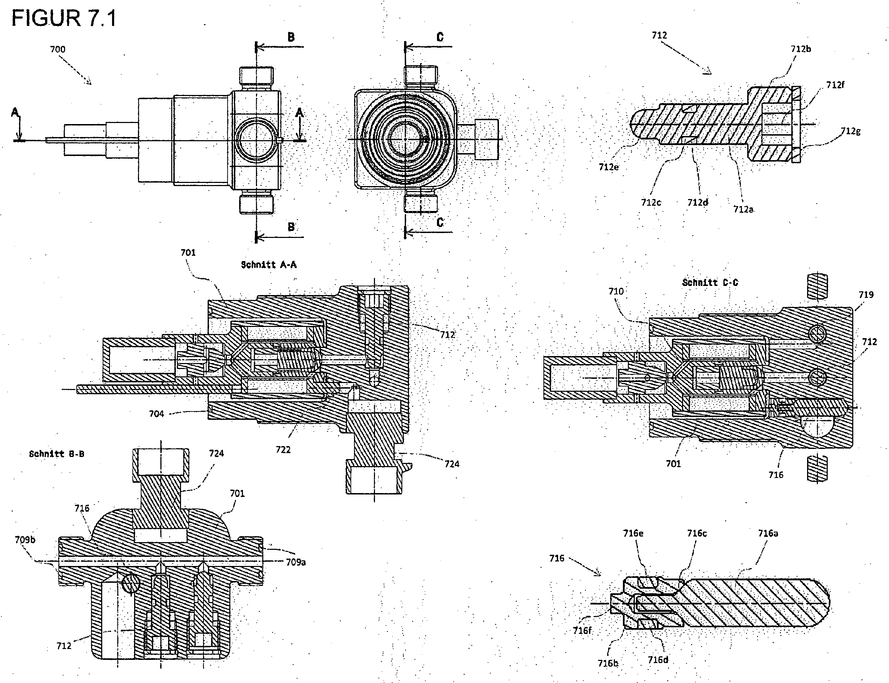

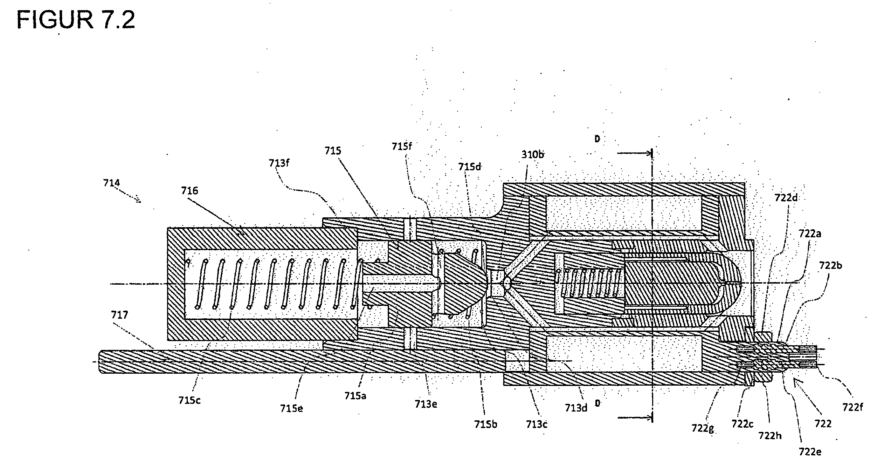

Die Erfindung umfasst weiterhin eine elektrische Durchführung mit einem Ansatz mit elektrischen Pins mit einer Dichtgeometrie umfassend unterschiedliche Durchmesser. Wie in Fig. 7, Fig. 7.1 und Fig. 7.2 gezeigt, umfasst das Behälterventil 700 ein Gehäuse 701 mit einem Befestigungsgewinde 702 zur Befestigung des Behälterventiles 700 in einer geeigneten Aufnahme des Speicherbehälters 102 und einer Nut 703 zur Aufnahme einer geeigneten Dichtung 704 zur Abdichtung des Hochdruckraumes 102a des Speicherbehälters 102 gegenüber der Umgebung mit den Hochdrucltanschlüssen 706a und 706b mit Gewindeanschlüssen 707a und 707b und Dichtnuten 708a und 708b zur Aufnahme einer geeigneten Dichtung 709a und 709b zum direkten Anschluss der Hochdruckleitungen und Abdichtung des Strömungsweges 710a gegen die Umgebung mit nachfolgendem Strömungsweg 710b und Kraftstoffzulauf 710c zwischen den Einlässen 706a, 706b und dem Hochdruckraum 102a des Speicherbehälters 102 mit der dazwischenliegenden Öffnung 711 mit zugehörigem Befestigungsgewinde 711a, Dichtfläche 711b, Dichtfläche 711c und Nut 711d zur Aufnahme des Manuellen Absperrventiles 712 zum manuellen Verschließen des Speicherbehälters 102, umfassend einen Ventilkörper 712a mit einem Befestigungsgewinde 712b zum Eingriff in das Befestigungsgewinde 711a, einer Nut 712c zur Aufnahme einer geeigneten Dichtung 712d zur Abdichtung gegen die Umgebung an der Dichtfläche 711c, einer Dichtfläche 712e zur Abdichtung des Strömungsweges 710b gegen 710c an der Dichtfläche 711b, einer Werkzeugaufnahme 712f zur Aufnahme eines Werkzeuges zur Montage, Öffnen bzw. Verschließen des Strömungsweges und den Sicherungsring 712g zur Abstützung in der Nut 711d gegen ungewolltes Herausdrehen des Manuellen Absperrventiles 712 beim Öffnen, und der dazwischen liegenden Öffnung 713 mit zugehörigem Ventilbefestigung 713a und Dichtfläche 713b zur Aufnahme des elektromagnetischen Ventiles 200 zur Abdichtung und zum elektromagnetischen Öffnen des Speicherbehälters 102, die von Innen zugängigen Strömungswege 715a und 715b zwischen der Umgebung und dem Hochdruckraum 102a mit zugehöriger Abstützfläche 715c und Dichtfläche 715d zur Aufnahme der Thermischen Sicherung 716 zur Vermeidung von Behälterbersten infolge Hitzeeinwirkung, umfassend eine flüssigkeitsgefüllte Glasampulle 716a mit festgelegter Bersttemperatur, die sich an der Abstützfläche 715c abstützt und einen Ventilkörper 716b, der sich mit der Abstützfläche 716c an der Glasampulle 716a abstützt und einer Nut 716d zur Aufnahme einer geeigneten Dichtung 716e zur Abdichtung gegen die Umgebung an der Dichtfläche 715d und dem Ansatz 716f gegen unbeabsichtigtes Herauswandern des Ventilkörpers 716b aus dem Strömungsweg 715a, die Strömungswege 717a und 717b zwischen dem Strömungsweg 710a und dem Hochdruckraum 102a mit der dazwischenliegenden Öffnung 718 mit zugehörigem Befestigungsgewinde 718a, Dichtfläche 718b, Dichtfläche 718c und Nut 718d zur Aufnahme eines Manuellen Serviceventiles 719 zur manuellen Entleerung des Speicherbehälters, wie das Manuelle Absperrventil umfassend einen Ventilkörper 712a mit einem Befestigungsgewinde 712b zum Eingriff in das Befestigungsgewinde 718a der Öffnung 718, einer Nut 712c zur Aufnahme einer geeigneten Dichtung 712d zur Abdichtung gegen die Umgebung an der Dichtfläche 718c der Öffnung 718, einer Dichtfläche 712e zur Abdichtung des Strömungsweges 717a gegen 717b an der Dichtfläche 718b der Öffnung 718, einer Werkzeugaufnahme 712f zur Aufnahme eines Werkzeuges zur Montage, Öffnen bzw. Verschließen des Strömungsweges und den Sicherungsring 712g zur Abstützung in der Nut 718d der Öffnung 718 gegen ungewolltes Herausdrehen des Manuellen Serviceventiles 719 beim Öffnen, die Verbindungswege 720a und 720b zwischen der Umgebung und dem Hochdruckraum 705 des Speicherbehälters mit der innenliegenden Öffnung 721, Abstützfläche 721a und Dichtfläche 721b zur Aufnahme der druckdichten elektrischen Durchführung 722, umfassend einen zylindrischen Ansatz 722a als Teil der Umspritzung der Magnetspule mit Abstützfläche 722b zur möglichen Abstützung an der Abstützfläche 721a des Verbindungsweges 720a, Dichtfläche 722c mit Dichtung 722d zur Abdichtung des Hochdruckraumes 201a zur Umgebung gegen die Dichtfläche 721b und den in den Ansatz 722a eingebetteten einzelnen Pins 722e mit beidseitigem Anschlussende 722f und 722g zur Befestigung der elektrischen Verbindungsleitungen zur Weiterleitung der elektrischen Signale zur Magnetspule des elektromagnetischen Ventiles 200 und zum Temperatursensor 717 und zwischenliegender Dichtgeometrie 722h, die mit Hilfe von unterschiedlichen Durchmessern einen mäanderförmigen Leckpfad bildet und unterschiedliche Wärmedehnungen ausgleicht und der außenliegenden Öffnung 723 zur Aufnahme des elektrischen Anschlusssteckers 724. Das elektromagnetische Ventil 200 umfasst anschließend an den Strömungsweg 310b eine Öffnung 713c mit Dichtfläche 713d, Querbohrungen 713e, Filteraufnahme 713f zur Aufnahme eines Durchflussbegrenzer 715 umfassend einen Ventilkörper 715 a, der in der Öffnung 713c geführt wird und von zwei Federelementen 715b und 715c in Position gehalten wird, sodass die Dichtfläche 715d des Durchflussbegrenzers 715 nicht gegen die Dichtfläche 713d dichtet, die Verbindung des Strömungsweges 310b zur Öffnung 713c offen ist und die Querbohrungen 713e der Öffnung 713c durch den Ventilkörper 715a verschlossen ist. Der Ventilkörper 715a umfasst weiter eine Innenbohrung 715e mit anschließenden Querbohrungen 715f als Verbindung zwischen dem Filter 716, der in die Öffnung 713f eingepresst ist, und der Öffnung 713c. Der Temperatursensor 717 ist in die Magnetspule 202 integriert.

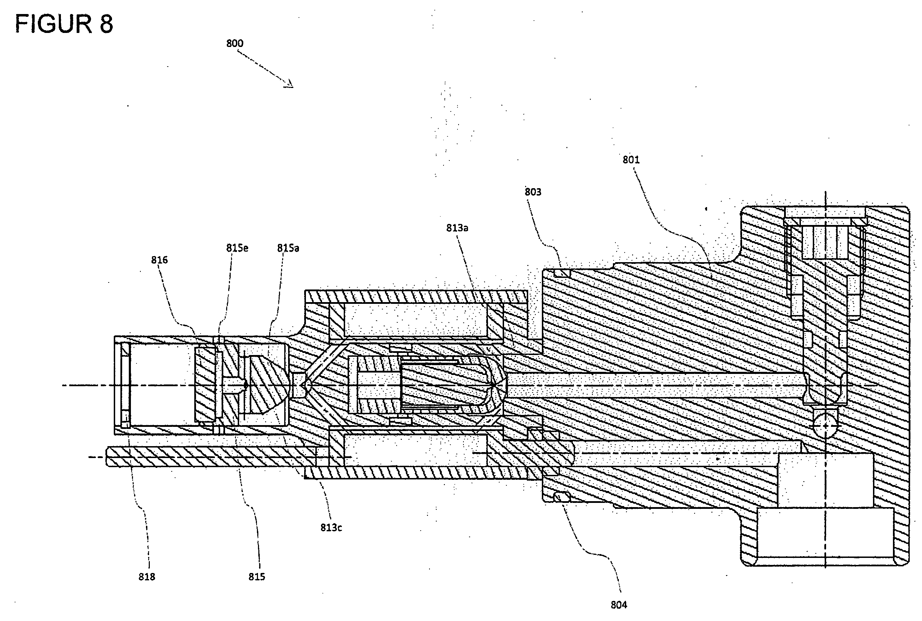

Wie in Fig. 8 gezeigt wird, umfasst eine zweite Ausführung für das Gehäuse 801 des Behälterventiles 800 eine Nut 803 für eine radialdichtende Dichtung 804 und nimmt das elektromagnetische Ventil entgegen Fig. 2 nicht in einer Öffnung des Ventilgehäuses auf, sondern an der speicherbehälterinnenliegenden stirnseitigen Befestigung 813a des Gehäuses 801. Der Durchflussbegrenzers 815 umfasst analog zum Durchflussbegrenzer 715 einen Ventilkörper 815a mit einer Öffnung 815e für Aufnahme des Filters 816.Die rückwertige Feder 815c des Durchflussbegrenzers 815 stützt sich an der Sicherung 818 des Abschlusses 310 ab.

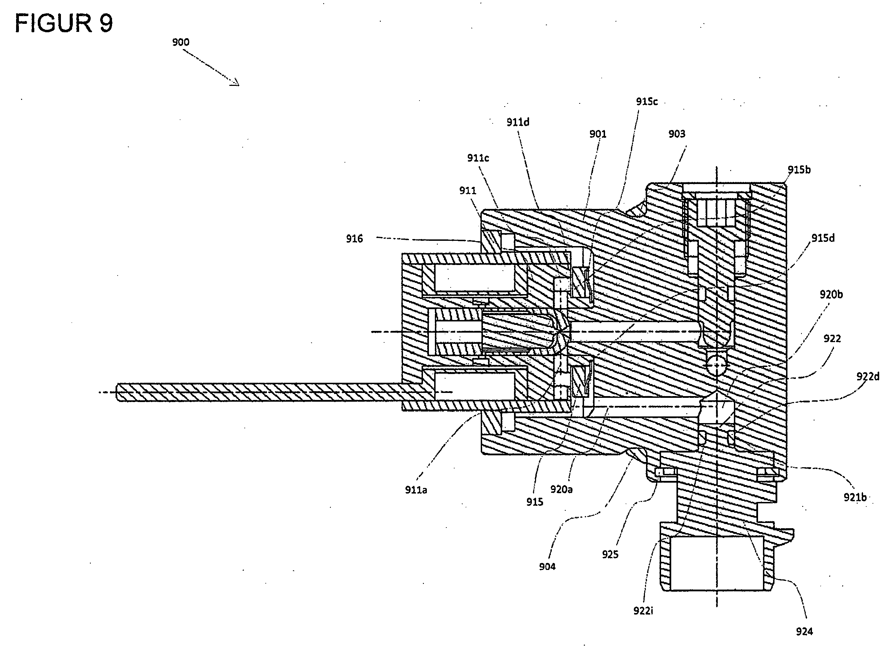

Wie in Fig. 9 gezeigt wird, umfasst das Gehäuse 901 des Behälterventiles 900 in einer weiteren Ausführungsform eine Nut 903 für eine Dichtung 904 am Übergang des Gewindes zum aus dem Speicherbehälter ragenden Gehäuseteil. Das elektromagnetische Ventil 200 umfasst einen Einstich 911b zur Führung der Strömung. Der scheibenförmige Durchflussbegrenzer 915 wird über ein Federelement 915c, dass sich ein einer geeigneten Nut 915d des Durchflussbegrenzers 915 abstützt in Position gehalten und dichtet bei Bedarf mit der Dichtfläche 915b gegen die zugeordnete Dichtfläche 911d der Ventilbefestigung 208. Der elektrische Anschlussstecker 924 umfasst in einer weiteren Ausführungsform die elektrische Durchführung 922, die mit einer Nut 922i ausgeführt ist und die Dichtung 922d aufnimmt, die gegen die zugeordnete Dichtfläche 921b der Verbindung 920b dichtet. Der elektrische Anschlussstecker wird durch einen Sicherungsring 925 in einer geeigneten Nut des Gehäuses 901 gehalten.

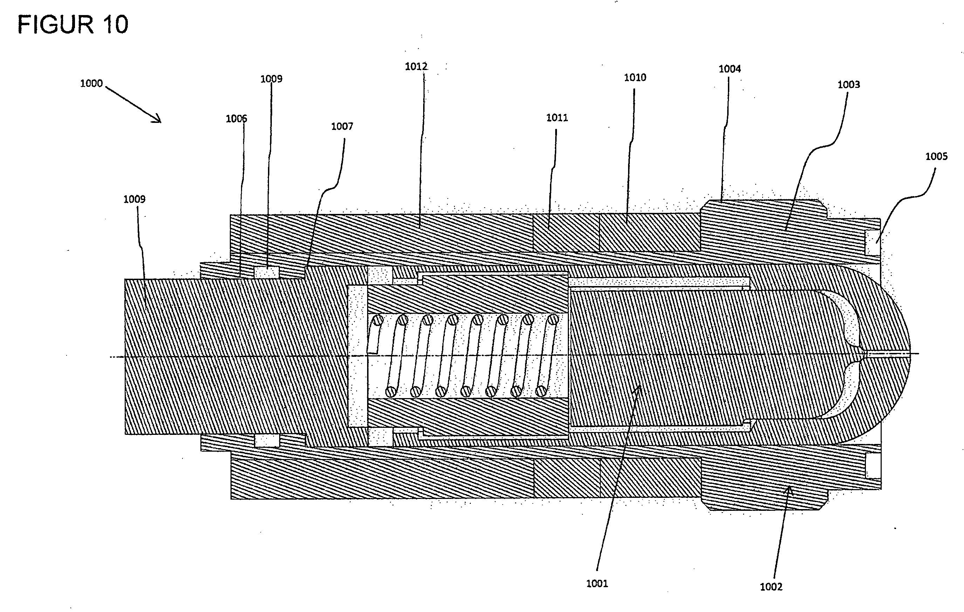

Wie in Fig. 10 gezeigt umfasst das elektromagnetische Ventil 1000 einen mehrteiligen Magnetanker 1001 gemäß vorangegangener Beschreibung und ein mehrteiliges druckdichtes Gehäuse 1002 für den behälterventilinternen oder behälterventilexternen Anbau, umfassend ein Gehäuse 1003 zur axial beweglichen Führung des Magnetankers 1001 und einen dichtenden magnetisierbaren Abschlusses 1008. Dabei umfasst das Gehäuse 1003 ein geeignetes Befestigungsgewinde 1004 zur Ventilmontage im Behälterventil 103 und eine Nut 1005 zur Aufnahme eines geeigneten Dichtringes zur Abdichtung des drucltbelasteten Ventilinnenraumes zum Behälterventil 103 und eine Aufnahmebohrung 1006 mit Abstützung 1007 zur Abstützung des Abschlusses 1008 und Dichtnut 1009 zur Aufnahme einer geeigneten Dichtung zur Abdichtung gegen die zugeordnete Dichtfläche des Abschlusses 1008. Dabei kann das Gehäuse 1003 ein nichtmagnetisierbares Gehäuse sein. Das dünnwandige drucktragende Gehäuse 1003 umfasst zur Druckhaltung und Leitung des Magnetfeldes eine magnetisierbare erste Verstärkung 1010, eine nichtmagnetisierbare zweite Verstärkung 1011 und eine magnetisierbare dritte Verstärkung 1012, die jeweils außen liegen können. Die erste Verstärkung 1010, die dritte Verstärkung 1012 und der Abschluss 1009 stehen in Verbindung mit dem Rückschluss der Magnetspule und leiten das Magnetfeld zum bzw. vom Magnetanker 1001.

In einer weiteren Ausführungsform kann die Betankung über die Regeleinheit erfolgen.

In einer weiteren Ausführungsform kann die Befüllkupplung direkt am Behälterventil angeordnet werden

In einer weiteren Ausführungsform kann das elektromagnetische Ventil mit dem Gehäuse des Behälterventiles verpresst werden.

In einer weiteren Ausführungsform kann das Dichtelement des elektromagnetischen Ventiles zu einer geeigneten Dichtfläche des Gehäuses des Behälterventiles abdichten.

In einer weiteren Ausführungsform kann am Dichtelement des Magnetankers eine geeignete Dichtung zur Verkleinerung des Leckstroms zwischen Ventilbefestigung und Dichtelement verbaut werden.

In einer weiteren Ausführungsform kann ein zweites elastisches Element, dass sich am Gegenpol abstützt und den Gegenpol gegen das Dichtelement drückt, verbaut werden.

In einer weiteren Ausführungsform können die Strömungswege des Abschlusses zum Durchflussbegrenzer achsparallel ausgeführt werden.

In einer weiteren Ausführungsform kann das Zwischenstück der Magnetspule entfallen.

In einer weiteren Ausführungsform kann der Wickelkörper der Magnetspule ohne Stege ausgeführt werden.

In einer weiteren Ausführungsform kann die Magnetspule an der Außenseite umspritzt werden.

In einer weiteren Ausführungsform kann das Gehäuse des Behälterventiles mit einem geeigneten mit Gewinde befestigten Gewindefitting zum Anschluss der Hochdruckleitungen ausgeführt werden.

In einer weiteren Ausführungsform kann das Gehäuse des Behälterventiles mit einem Hochdruclcanschluss ausgeführt werden.

In einer weiteren Ausführungsform kann das Manuelle Absperrventil bei Ausführung des Gehäuses des Behälterventiles mit einem

Hochdruckanschluss gegenüberliegend und parallel zum Hochdruckanschluss ausgeführt werden.

In einer weiteren Ausführungsform kann das Mechanische Absperrventil mehrteilig mit einem geeigneten Dichtelement zur Abschließen des Strömungsweges ausgeführt werden.

In einer weiteren Ausführungsform kann das Gehäuse des Behälterventiles mit einem eigenen Anschluss für eine Sicherheitsleitung zur Abfuhr des Speichergases nach Freigabe des Strömungsweges durch die Thermische Sicherung ausgeführt werden.

In einer weiteren Ausführungsform kann das Gehäuse des Behälterventiles mit einem Befestigungsgewinde und geeigneter Dichtfläche zum Verbau einer externen Thermischen Sicherung als geschlossener Einschraubteil ausgeführt werden.

In einer weiteren Ausführungsform kann die Elektrische Durchführung als eigener Teil ausgeführt werden.

In einer weiteren Ausführungsform können die Pins der Elektrischen ohne Dichtgeometrie ausgeführt werden.

In einer weiteren Ausführungsform können die Pins der Elektrischen Durchführung eingepresst werden.

In einer weiteren Ausführungsform werden die elektrischen Leitungen des Temperatursensors und der Magnetwicklung ohne Pin direkt durch die Elektrische Durchführung geführt.

In einer weiteren Ausführungsform kann zur äußeren Signalweiterleitung ein loses Kabel mit angebautem Elektrikstecker ausgeführt werden.

In einer weiteren Ausführungsform kann der Durchflussbegrenzer als eigenständiger Teil ausgeführt werden, der in geeigneter Weise mit dem Ausgang des elektromagnetischen Ventiles verbunden ist.

In einer weiteren Ausführungsform wird der Durchflussbegrenzer mit Hilfe einer Feder positioniert.

In einer weiteren Ausführungsform kann der Filter als eigenständiger Teil ausgeführt werden, der in geeigneter Weise mit dem Ausgang des elektromagnetischen Ventiles verbunden ist.

In einer weiteren Ausführungsform können die einzelnen Elemente in Strömungsrichtung vertauscht positioniert werden.

In einer weiteren Ausführungsform kann der Abschluss des drucktragenden Ventilgehäuses mit einem Befestigungsgewinde im Gehäuse befestigt werden und/oder die Dichtnut umfassen.

In einer weiteren Ausführungsform umfasst das drucktragende Ventilgehäuse eine magnetisierbare ersten Verstärkung und eine nichmagnetisierbare zweite Verstärkung.

Weitere Ausführungsformen entstehen durch Kombination der angeführten Ausführungsformen.

## Patentansprüche

1. Elektromagnetisches Ventil (200) für ein Behälterventil (103) einer Kraftstoffversorgungsanlage (100) eines Gaskraftfahrzeugs umfassend eine Magnetspule (202) mit einem inneren Rückschluss (207) und
einen Magnetanker (201), der in dem inneren Rückschluss (207) axial beweglich ist,
wobei der Magnetanker (201) aus einem Anker (205), einem Dichtelement (204), welches zwischen dem Anker (205) und einem Kraftstoffzulauf (208c) angeordnet ist, und einem Gegenpol (206) besteht, welcher am Dichtelement (204) anliegt;
wobei die Magnetspule (202) und der Magnetanker (201) so angeordnet sind, dass beim Aktivieren der Magnetspule (202) zuerst eine Vorsteueröffnung (204c) für einen Hochdruck-Kraftstoff durch Verschieben des Ankers (205) in Richtung des Gegenpols (206) und durch Ablösen des Ankers (205) von dem Dichtelement (204) geöffnet wird, wodurch der Hochdruck-Kraftstoff aus dem Bereich des Gegenpoles (206) über die Vorsteueröffnung (204c) in den Kraftstoffzulauf (208c) abströmt;
**dadurch gekennzeichnet, dass**
nachfolgend eine Hauptöffnung für den Hochdruck-Kraftstoff durch Verschieben des Magnetankers (201) in Richtung eines Abschluss (210) der Magnetspule (202) und durch Ablösen des Dichtelements (204) vom Kraftstoffzulauf (208c) durch die Druckdifferenz aufgrund des Abströmens des Hochdruck-Kraftstoffes aus dem Bereich des Gegenpoles (206) geöffnet wird.

2. Elektromagnetisches Ventil (200) nach Anspruch 1, wobei der Anker (205) und der Gegenpol (206) einen ersten Arbeitsspalt (205c) zum Öffnen der Vorsteueröffnung (220) einschließen.

3. Elektromagnetisches Ventil (200) nach einem der vorhergehenden Ansprüche, wobei der Gegenpol (206) und der Abschluss (210) der Magnetspule (202) einen zweiten Arbeitsspalt (206b) zum Öffnen der Hauptöffnung einschließen.

4. Elektromagnetisches Ventil (200) nach dem vorhergehenden Anspruch, wobei der erste Arbeitsspalt (206b) kleiner als der zweite Arbeitsspalt (205c) ist, und bevorzugt zwischen 50 und 0,5 % und weiter bevorzugt zwischen 25 und 0,01 % seiner Länge beträgt.

5. Elektromagnetisches Ventil (200) nach einem der vorhergehenden Ansprüche, wobei die Vorsteueröffnung (204c) einen kleineren Strömungsquerschnitt als die Hauptöffnung aufweist, der bevorzugt zwischen 25 und 0,05 % und weiter bevorzugt zwischen 15 und 1 % des Strömungsquerschnitts der Hauptöffnung liegt.

6. Elektromagnetisches Ventil (200) nach einem der vorhergehenden Ansprüche; wobei ein Vorsteuerhub zum Öffnen der Vorsteueröffnung (204c) unabhängig von einem Haupthub zum Öffnen der Hauptöffnung ist.

7. Elektromagnetisches Ventil (200) nach einem der vorhergehenden Ansprüche, wobei die Magnetspule (202) eine Befestigungskomponente (208) in dem inneren Rückschluss (207), einen äußeren Rückschluss (214) und eine Magnetwicklung (211) umfasst.

8. Elektromagnetisches Ventil (200) nach einem der vorhergehenden Ansprüche, wobei das Dichtelement (204) den Anker (205) zumindest teilweise umgibt.

9. Elektromagnetisches Ventil (200) nach einem der vorhergehenden Ansprüche, wobei das Dichtelement (204) den Gegenpol (206) zumindest teilweise umgibt.

10. Elektromagnetisches Ventil (200) nach einem der vorhergehenden Ansprüche, wobei das Dichtelement (204) eine Hauptdichtfläche (204a) zur Abdichtung gegen eine Dichtfläche (208d) der Befestigungskomponente (208) des Rückschlusses (207) und eine Vorsteuerdichtfläche (204b) zur Abdichtung gegen eine Vorsteuerdichtfläche (205a) des Ankers (205) umfasst.

11. Elektromagnetisches Ventil (200) nach einem der vorhergehenden Ansprüche, wobei das Dichtelement (204) eine Hauptdichtfläche (204a) zur Abdichtung gegen eine Dichtfläche (713b) des Gehäuses (701) und eine Vorsteuerdichtfläche (204b) zur Abdichtung gegen eine Vorsteuerdichtfläche (205a) des Ankers (205) umfasst.

12. Elektromagnetisches Ventil (200) nach dem vorhergehenden Anspruch, wobei das Dichtelement (204) eine Bohrung (204c) zwischen der Vorsteuerdichtfläche (204b) und Hauptdichtfläche (204a) und eine Abstützung (204d) zur Abstützung des Gegenpoles (206) am Dichtelement (204) umfasst.

13. Elektromagnetisches Ventil (200) nach Anspruch 10 oder nach Anspruch 11oder 12, wenn abhängig von Anspruch 10, weiterhin ein elastisches Element (203) umfassend, welches bei nicht erregter Magnetspule (202) den Anker (205) gegen das Dichtelement (204) und das Dichtelement (204) gegen die Dichtfläche (208d) drückt.

14. Elektromagnetisches Ventil (200) nach einem der vorhergehenden Ansprüche, weiterhin ein elastisches Element umfassend, welches den Gegenpol (206) gegen das Dichtelement (204) drückt.

15. Behälterventil (103) für eine Kraftstoffversorgungsanlage (100), welches ein Elektromagnetisches Ventil (200) nach einem der Ansprüche 1 bis 14 umfasst, und insbesondere mindestens eines der folgenden Elemente umfasst: Manuelles Absperrventil, Thermische Sicherung, Berstsicherung, Manuelles Serviceventil, Durchflussbegrenzer, Filterelement, Temperatursensor, Elektrische Durchführung.

16. Mehrteiliges druckdichtes Gehäuse (1002) eines elektromagnetischen Ventils (200) eines Behälterventils (103) gemäß Anspruch 15 einer Kraftstoffversorgungsanlage (100) eines Gaskraftfahrzeugs umfassend ein Gehäuse (1003) zur axial beweglichen Führung des Magnetankers (1001), eines magnetisierbaren Abschlusses (1008), einer magnetisierbaren ersten Verstärkung (1010), einer nichtmagnetisierbaren zweiten Verstärkung (1011) und einer magnetisierbaren dritten Verstärkung (1012), wobei die Verstärkungen (1010, 1011, 1012) die radiale Druckfestigkeit des Gehäuses (1002) sicherstellen und das Magnetfeld zum Magnetanker (1002) leiten.

17. Behälterventil (103) für eine Kraftstoffversorgungsanlage (100), welches ein Elektromagnetisches Ventil (200) nach einem der Ansprüche 1 bis 14 umfasst, und mindestens eines der folgenden Elemente in das elektromagnetische Ventil (200) integriert ist:
Durchflussbegrenzer, Temperatursensor, Filterelement, Elektrische Durchführung.

18. Kraftstoffversorgungsanlage (100) mit einem Elektromagnetischen Ventil (200) nach einem der Ansprüche 1 bis 14, welches in einem Hochdruckraum (102a) eines Kraftstoffspeicherbehälters (102) angeordnet ist.

19. Durchflussbegrenzer (815) einer Kraftstoffversorgungsanlage (100) nach Anspruch 18, umfassend einen Ventilkörper (815e) mit einem integrierten Filterelement (816).

## Claims

1. An electromagnetic valve (200) for a tank valve (103) of a fuel supply system (100) of a gas fuel motor vehicle, comprising a magnetic coil (202) with an inner guide (207); and
a magnetic armature (201) which can move axially in the inner guide (207), wherein the magnetic armature (201) consists of an armature (205), a seal element (204) which is arranged between the armature (205) and a fuel inlet (208c), and a counter pole (206) which abuts the seal element (204);
wherein the magnetic coil (202) and the magnetic armature (201) are arranged such that, when activating the magnetic coil (202), a pilot opening (204c) for a high-pressure fuel is opened by means of the armature (205) sliding in the direction of the counter pole (206) and by means of the armature (205) being released from the seal element (204), so that the high-pressure fuel from the region of the counter pole (206) flows into the gas inlet (208c) via the pilot opening (204c);
**characterized in that**
a primary opening for the high-pressure fuel is subsequently opened by means of the magnetic armature (201) sliding in the direction of a termination (210) of the magnetic coil (202) and by means of the seal element (204) releasing from the fuel inlet (208c) due to a pressure difference created as a result of the flow of the high-pressure fuel from the region of the counter pole (206).

2. The electromagnetic valve (200) according to claim 1, wherein the armature (205) and the counter pole (206) enclose a first working air gap (205c) for opening the pilot opening (220).

3. The electromagnetic valve (200) according to any one of the preceding claims, wherein the counter pole (206) and the termination (210) of the magnetic coil (202) enclose a second working air gap (206b) for opening the primary opening.

4. The electromagnetic valve (200) according to the preceding claim, wherein the first working air gap (206b) is smaller than the second working air gap (205c), and has a length of preferably between 50 and 0.5%, and more preferably between 25 and 0.01%, of the length of the second working air gap (205c).

5. The electromagnetic valve (200) according to any one of the preceding claims, wherein the pilot opening (204c) has a smaller flow cross-section than the primary opening, which is preferably between 25 and 0.05%, and more preferably between 15 and 1% of the flow cross-section of the primary opening.

6. The electromagnetic valve (200) according to any one of the preceding claims, wherein a pilot lifting movement to open the pilot opening (204c) is independent of a primary lifting movement to open the primary opening.

7. The electromagnetic valve (200) according to any one of the preceding claims, wherein the magnetic coil (202) comprises a fastening component (208) within the inner guide (207), an external guide (214), and a magnetic winding (211).

8. The electromagnetic valve (200) according to any one of the preceding claims, wherein the seal element (204) surrounds the armature (205) at least partially.

9. The electromagnetic valve (200) according to any one of the preceding claims, wherein the seal element (204) surrounds the counter pole (206) at least partially.

10. The electromagnetic valve (200) according to any one of the preceding claims, wherein the seal element (204) comprises a primary seal surface (204a) for creating a seal with a seal surface (208d) of the fastening component (208) of the guide (207), and a pilot seal surface (204b) for creating a seal with a pilot seal surface (205a) of the armature (205).

11. The electromagnetic valve (200) according to any one of the preceding claims, wherein the seal element (204) has a primary seal surface (204a) for creating a seal with a seal surface (713b) of the housing (701), and a pilot seal surface (204b) for creating a seal with a pilot seal surface (205a) of the armature (205).

12. The electromagnetic valve (200) according to any one of the preceding claims, wherein the seal element (204) comprises a bore hole (204c) between the pilot seal surface (204b) and the primary seal surface (204a), and a support (204d) for supporting the counter pole (206) on the seal element (204).

13. The electromagnetic valve (200) according to claim 10 or claims 11 or 12, when depending from claim 10, further comprising an elastic element (203) which, when the magnetic coil (202) is not excited, presses the armature (205) against the seal element (204) and the seal element (204) against the seal surface (208d).

14. The electromagnetic valve (200) according to any one of the preceding claims, further comprising an elastic element, which presses the counter pole (206) against the seal element (204).

15. Tank valve (103) for a fuel supply system (100), comprising an electromagnetic valve (200) according to any one of claims 1 to 14, and in particular comprising at least one of the following elements: a manual check valve, a thermal protection, a burst protection, a manual service valve, a flow restrictor, a filter element, a temperature sensor, an electrical passage.

16. A multi-part, pressure-tight housing (1002) of an electromagnetic valve (200) of a tank valve (103) according to claim 15 of a fuel supply system (100) of a gas fuel motor vehicle comprising a housing (1003) for guiding the axial movement of the magnetic armature (1001), of a magnetizable termination (1008), of a magnetizable first reinforcement (1010), of a non-magnetizable second reinforcement (1011) and of a magnetizable third reinforcement (1012), wherein the reinforcements (1010, 1011, 1012) ensure the radial pressure resistance of the housing (1002) and conduct the magnetic field to the magnetic armature (1002).

17. A tank valve (103) of a fuel supply system (100), comprising an electromagnetic valve according to any one of claims 1 to 14 and wherein at least one of the following elements is integrated into the electromagnetic valve: a flow restrictor, a temperature sensor, a filter element, an electrical passage.

18. A fuel supply system (100) having an electromagnetic valve (200) according to any one of claims 1 to 14, which is arranged in a high-pressure chamber (102a) of a fuel storage tank (102).

19. A flow restrictor (815) of a fuel supply system (100) according to claim 18, comprising a valve body (815e) with an integrated filter element (816).

## Revendications

1. Valve électromagnétique (200) pour une valve de réservoir (103) d'une installation d'alimentation en carburant (100) d'un véhicule à gaz, comprenant une bobine d'électro-aimant (202) avec une culasse intérieure (207), et une armature d'aimant (201) mobile axialement dans la culasse intérieure (207), l'armature d'aimant (201) étant constituée d'une armature (205), d'un élément d'étanchéité (204), disposé entre l'armature (205) et une admission de carburant (208c), et d'un pôle opposé (206) appliqué contre l'élément d'étanchéité (204) ; la bobine d'électroaimant (202) et l'armature d'aimant (201) étant disposées de façon que, lors de l'activation de la bobine d'électro-aimant (202), une ouverture de commande anticipée (204c) pour un carburant à haute pression soit ouverte par déplacement de l'armature (205) en direction du pôle opposé (206) et par décollement de l'armature (205) de l'élément d'étanchéité (204), ce qui permet au carburant à haute pression de s'écouler de la zone du pôle opposé (206) vers l'admission de carburant (208c) à travers l'ouverture de commande anticipée (204c), **caractérisée en ce qu'**ensuite une ouverture principale pour le carburant à haute pression est ouverte par déplacement de l'armature d'aimant (201) en direction d'une terminaison (201) de la bobine d'électro-aimant (202) et par décollement de l'élément d'étanchéité (204) de l'admission de carburant (208c) du fait de la différence de pression due à la sortie du carburant à haute pression hors de la zone du pôle opposé (206).

2. Valve électromagnétique (200) selon la revendication 1, l'armature (205) et le pôle opposé (206) formant un premier intervalle de travail (205c) pour ouvrir l'ouverture de commande anticipée (220).

3. Valve électromagnétique (200) selon une des revendications précédentes, le pôle opposé (206) et la terminaison (210) de la bobine d'électro-aimant (202) formant un second intervalle de travail (206b) pour ouvrir l'ouverture principale.

4. Valve électromagnétique (200) selon la revendications précédente, le premier intervalle de travail (206b) étant plus petit que le second intervalle de travail (205c) et étant compris, de manière préférentielle, entre 50 et 0,5 % et, de manière plus préférentielle, entre 25 et 0,01 % de la longueur de celui-ci.

5. Valve électromagnétique (200) selon une des revendications précédentes, l'ouverture de commande anticipée (204c) présentant une section d'écoulement inférieure à celle de l'ouverture principale, à savoir comprise, de manière préférentielle, entre 25 et 0,05 % et, de manière plus préférentielle, entre 15 et 1 % de la section d'écoulement de l'ouverture principale.

6. Valve électromagnétique (200) selon une des revendications précédentes, une course de commande anticipée pour ouvrir l'ouverture de commande anticipée (204c) étant indépendante d'une course principale pour ouvrir l'ouverture principale.

7. Valve électromagnétique (200) selon une des revendications précédentes, la bobine d'électro-aimant (202) comprenant un composant de fixation (208) dans la culasse intérieure (207), une culasse extérieure (214) et un enroulement d'électro-aimant (211).

8. Valve électromagnétique (200) selon une des revendications précédentes, l'élément d'étanchéité (204) entourant l'armature (205) au moins partiellement.

9. Valve électromagnétique (200) selon une des revendications précédentes, l'élément d'étanchéité (204) entourant le pôle opposé (206) au moins partiellement.

10. Valve électromagnétique (200) selon une des revendications précédentes, l'élément d'étanchéité (204) comprenant une surface d'étanchéité principale (204a) pour l'étanchéité par rapport à une surface d'étanchéité (208d) du composant de fixation (208) de la culasse (207), et une surface d'étanchéité de commande anticipée (204b) pour l'étanchéité par rapport à une surface d'étanchéité de commande anticipée (205a) de l'armature (205).

11. Valve électromagnétique (200) selon une des revendications précédentes, l'élément d'étanchéité (204) comprenant une surface d'étanchéité principale (204a) pour l'étanchéité par rapport à une surface d'étanchéité (713b) du boîtier (701), et une surface d'étanchéité de commande anticipée (204b) pour l'étanchéité par rapport à une surface d'étanchéité de commande anticipée (205a) de l'armature (205).

12. Valve électromagnétique (200) selon la revendication précédente, l'élément d'étanchéité (204) étant pourvu d'un perçage (204c) entre la surface d'étanchéité de commande anticipée (204b) et la surface d'étanchéité principale (204a), et d'un moyen d'appui (204d) permettant au pôle opposé (206) de prendre appui sur l'élément d'étanchéité (204).

13. Valve électromagnétique (200) selon une des revendications 10 ou 11, 12 si elles sont dépendantes de la revendication 10, comprenant également un élément élastique (203) qui, lorsque la bobine d'électro-aimant (202) n'est pas excitée, pousse l'armature (205) contre l'élément d'étanchéité (204) et l'élément d'étanchéité (204) contre la surface d'étanchéité (208d).

14. Valve électromagnétique (200) selon une des revendications précédentes, comprenant également un élément élastique qui pousse le pôle opposé (206) contre l'élément d'étanchéité (204).

15. Valve de réservoir (103) pour une installation d'alimentation en carburant (100), comprenant une valve électromagnétique (200) selon une des revendications précédentes 1 à 14, et comprenant au moins un des éléments suivants : valve d'arrêt manuelle, protection thermique, sécurité anti-éclatement, vanne de service manuelle, limiteur de débit, élément filtrant, capteur de température, passage électrique.

16. Boîtier en plusieurs parties étanche à la pression (1002) d'une valve électromagnétique (200) d'une valve de réservoir (103) selon la revendication 15 d'une installation d'alimentation en carburant (100) d'un véhicule à gaz, comprenant un boîtier (1003) pour le guidage en translation axiale de l'armature d'aimant (1001), une terminaison magnétisable (1008), un premier renfort magnétisable (1010), un deuxième renfort non magnétisable (1011) et un troisième renfort magnétisable (1012), les renforts (1010, 1011, 1012) garantissant la résistance radiale à la pression du boîtier (1002) et conduisant le champ magnétique à l'armature d'aimant (1002).

17. Valve de réservoir (103) pour une installation d'alimentation en carburant (100), comprenant une valve électromagnétique (200) selon une des revendications 1 à 14, et au moins un des éléments suivants étant intégré à la soupape de la valve électromagnétique (200) : limiteur de débit, capteur de température, élément filtrant, passage électrique.

18. Installation d'alimentation en carburant (100) comprenant une valve électromagnétique (200) selon une des revendications 1 à 14, laquelle est disposée dans une chambre à haute pression (102a) d'un réservoir de carburant (102).

19. Limiteur de débit (815) d'une installation d'alimentation en carburant (100) selon la revendication 18, comprenant un corps de valve (815e) avec un élément filtrant (816) intégré.
